# EUROPEAN PATENT SPECIFICATION

(11) **EP 2 271 461 B1**
(45) Date of publication and mention of the grant of the patent: **28.11.2012**
(21) Application number: 09742921.1
(22) Date of filing: 08.05.2009
(51) Int. Cl.: B23P 19/06, B25B 23/14, B25B 23/147, F16D 43/24

(54) **POWER TOOL FOR TIGHTENING SCREW JOINTS**
ELEKTROWERKZEUG ZUM ANZIEHEN VON SCHRAUBVERBINDUNGEN
OUTIL MOTORISÉ POUR SERRER DES ASSEMBLAGES À VIS

(30) Priority: 08.05.2008 SE 0801023
(43) Date of publication of application: 12.01.2011
(73) Proprietor: Atlas Copco Industrial Technique AB, 105 23 Stockholm (SE)
(72) Inventor: ELSMARK1 Karl Johan LARS, SE-132 39 Saltsjö-Boo (SE)
(86) International application number: PCT/SE2009/000232
(87) International publication number: WO 2009/136839

(56) References cited:
- EP-A1- 1 468 796
- EP-A2- 0 349 482
- EP-A2- 1 112 819
- DE-A1- 4 344 849
- DE-B1- 2 148 739
- US-A- 3 857 180
- US-A- 4 208 555
- US-A- 5 419 745
- US-A- 6 085 849
- US-A1- 2005 247 459
- US-A1- 2005 247 459

## Description

### FIELD OF THE INVENTION

The invention concerns a power tool for tightening screw joints according to the preamble of claim 1.

Such a power tool is known from US2005/0247459*,* which represents the closest prior art.

### BACKGROUND OF THE INVENTION

Screw or nut runners for industrial purposes are previously known which comprise means for subjecting an electrically driven motor to a braking torque when a predetermined tightening condition, such as increased torque resistance over a certain level, has been reached.

One example of such a device is disclosed in US 4 210 852. In that document, such a condition can be detected by monitoring current supplied to the motor of the device. In order to achieve a rapid tool stop the motor is short-circuited and consequently braked strongly.

Even though the previously known device functions well, there is a desire to obtain even higher productivity and thus provide a power tool with high rotational speed that can be used also for screw joints that are characterized by low or virtually no elasticity.

Examples of such screw joints are found in applications, where large head screws are used for assembly and mounting purposes, and where there is a clear risk of damaging the screw joint if a high speed tool can not be brought to a stop sufficiently fast. Such problematic screw joints are for example encountered in some parts of the electronics industry, wherein there is also an extremely high productivity requirement.

In such cases extremely fast stop is thus desirable in order to obtain screw joints with high quality also when a fast rotating screw or nut driver is used.

### AIM AND MOST IMPORTANT FEATURES OF THE INVENTION

It is an aim of the present invention to provide a power tool of the kind described above which addresses and at least partially reduces the above problems.

This aim is obtained in a power tool according to the above which is characterized by the characterizing features in claim 1.

By providing the tool with a release coupling which disconnects the rotational parts of the motor and transmission elements from the output shaft it is achieved that the major portion of the moment of inertia is disconnected.

Hereby the screw joint is not affected by the major part of the kinetic energy stored in rotating masses inside the power tool. Further, the difficulties with detecting fast processes are at least partially avoided.

As an example, the inertia factor of the parts that can be disconnected according to the invention may well be as great as 20 a 100 times the inertia factor of the elements that remain connected to the out-put shaft.

US 5 155 421 describes a power wrench for tightening screw joints making use of a retardation responsive inertia device. That device is, however, arranged for the activation of a switch as a certain predetermined retardation magnitude in the motor rotor is exceeded.

The invention is particularly useful when the rotation motor is an electrically driven motor and when the device for braking the motor is a circuit for initiating an electrical braking torque to the motor, since in such applications there are already examples of very fast rotating and fast stop screw drivers.

It is preferred that the first coupling part is subjected to a force in the direction of the first position by at least one from the group: an elastic element, an electric coil, since this allows for an initial torque to be transferred by the coupling and a distinct initial position. The elastic element can be a compression spring or any other suitable elastic means.

A coil, which is energized by an electric current, can provide the same function as the elastic element or provide additional holding force. It can further keep the coupling disconnected or even, if for the purpose properly energised, displace the first coupling part to a second position where it is out of engagement with the second coupling part, also when there is no braking action on the tool. It can also provide a stabilizing effect on the first coupling part and prevent it from oscillating.

The first coupling part is preferably guided by any one from the group: screw tread, ball and groove, pin and groove, cam and follower. The use of a screw thread is advantageously simple and economic, but allows basically for using the tool in only one rotational direction, if no additional measures are added for allowing reverse direction driving. Ball and groove means or pin and groove means for guiding of the first coupling part makes it possible to use the tool in both rotational directions by shaping and directing the groove accordingly.

According to the background art, a tool having a rotational speed of 45 000 rpm can be braked to a resulting rotational speed of 0 rpm in 5 msek. Also such very fast braking action leaves however an unwanted after-rotation of a screw because of the considerable moment of inertia in the rotating parts.

The impact of this after-rotation is difficult to calculate and to compensate for in fast processes and is thus generally harmful to the result, particularly in respect of the screw joints discussed above. According to the invention, a great deal of this after-rotation is avoided.

The corresponding advantages are obtained in respect of a release coupling device for a screw joint tightening power tool.

Further features and advantages of the invention are described in the following description of embodiments.

### BRIEF DESCRIPTION OF DRAWINGS

The invention will now be described in greater detail by way of embodiments and with reference to the annexed drawings, wherein:
Fig. 1 diagrammatically shows a power tool according to the invention,
Fig. 2a shows, in an axial section, the release coupling of the power tool in Fig. 1 in a first position,
Fig. 2b shows, in an axial section, the release coupling of the power tool in Fig. 1 in a second position, and
Fig. 3 shows a detail of the release coupling in a second embodiment.

### DESCRIPTION OF EMBODIMENTS

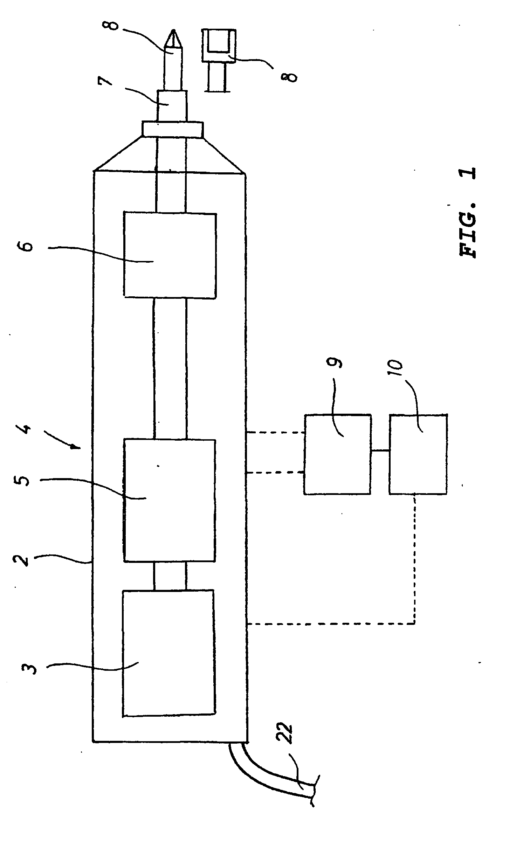

Fig. 1 shows diagrammatically a power tool 1 for tightening screw joints with only its main functional elements indicated. The power tool 1 comprises a housing 2 wherein is arranged an electrically driven motor 3. The motor 3 is connected to an intermediate power transmission unit 4 which in turn includes a gear transmission 5 and a release coupling 6.

The release coupling 6 is on an output side connected to an output shaft 7 which at its distal end carries a screw engagement member 8.

With 9 is indicated a central processing unit, which monitors the operation of the power tool. A circuit 10 for initiating a braking torque is functionally connected to the processing unit and to the electrically driven motor 3.

The unit 3 can be arranged to detect a particular condition representative that a predetermined torque has been reached by for example monitoring current supplied to the motor of the device. In order to achieve a rapid tool stop the motor can be short-circuited and consequently braked strongly. Other per se known braking actions to the motor can also be used. The motor can be battery driven or be connected to a power supply in net over an electrical cord 22.

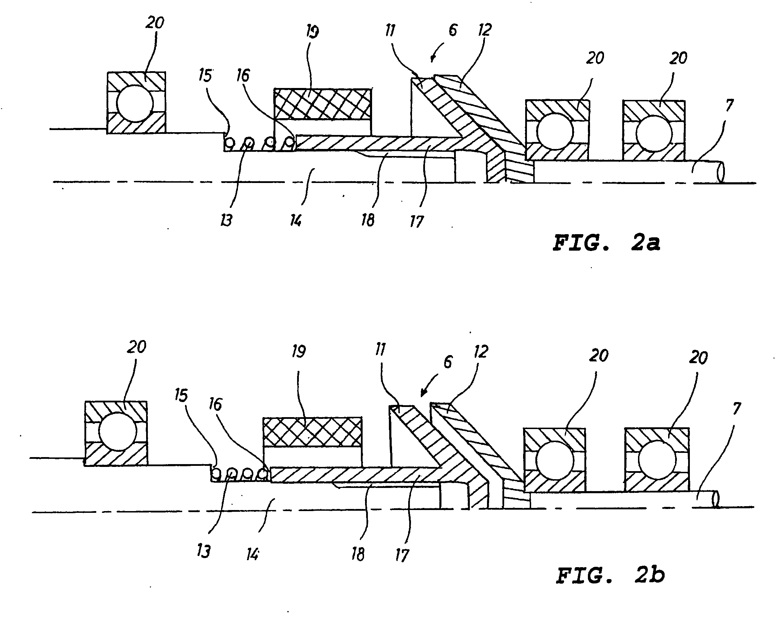

In Fig. 2a, the release coupling 6 is shown in more detail. In particular the release coupling 6 includes a first coupling part 11 which is supported by a support shaft 14. The support shaft 14 is in turn rotationally connected to the electrically driven motor. Ball bearings are indicated with 20.

The first part 11 is pressed by a helical compression spring 13, between a shoulder 15 on the support shaft 14 and a shoulder surface 16 on a sleeve portion 17 of the first part 11, to the shown position which is a first position of the first coupling part. In that position the first coupling part is in engagement with a second coupling part 12 of the release coupling 6.

Furthermore, the first coupling part 11 is guided in respect of the support shaft 14 over a screw thread 18 in such a way that relative rotation of the first coupling part 11 in respect of the support shaft 14 causes a relative axial displacement of the first coupling part 11 in respect of the support shaft 14 and also of the second coupling part 12.

In Fig. 2b the release coupling 6 is shown in a second position of the first coupling part, wherein the latter has been axially displaced such that torque transmission between the first and the second coupling parts 11 and 12 has been interrupted.

According to the invention, this second position of the first coupling part 11 is reached when the electrically driven motor 3 is subjected to a braking torque which in turn also induces a strong retardation of the support shaft 14. Because of the kinetic energy stored in the first coupling part during rotation and the braking of the support shaft 14, a relative rotational inertia movement between the first coupling part 11 and the support shaft 14 will be the result.

Hereby the first coupling part 11, through the guidance of the thread 18, will leave its first position and reach the second position which is shown in Fig. 2b. It should be noted that the "first position" is clearly defined whereas "second position or positions" can be defined as all positions where the first coupling part is out of engagement with the second coupling part.

When the first coupling part is in the second position or positions the only remaining rotational parts that are still connected to the screw engagement member will therefore be the output shaft 8 and the second coupling part 12, the kinetic energy of which having a level such that it will not harmfully affect the resulting screw joint. It should, however, be noted that one or more gear steps (not shown) could be positioned between the release coupling and the output shaft. Such elements do not, however, harmfully affect the effect of the invention if dimensioned properly.

The invention can be modified within the scope of the following claims. The release coupling may be constructed otherwise than with conical contact surfaces which are shown in Figs. 2a and 2b, for example with plane contact surfaces.

The helical compression spring 13 may be replaced with another actuating means such as for example an electrical coil, indicated with 19, which can have the combined features of 1) providing holding force for the coupling, 2) providing a continued release position of the first coupling part, and 3) providing a means for stabilizing the first coupling part in order to avoid unwanted oscillations. The power supply to the coil 19 can be controlled by the processing unit 9. The coil can also be a complementary element to an elastic element such as the compression spring 13.

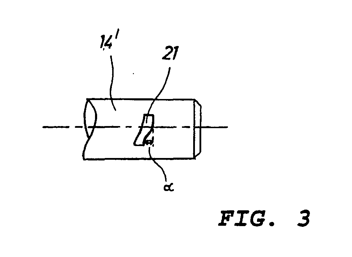

In Fig. 3 is shown an alternative to the thread 18 in Figs. 2a and 2b. A support shaft 14' is provided with a guide groove 21 having an angular displacement of α° to a plane which is transverse to the axis of the shaft 14'. The first coupling part can be guided by the groove 21 by the intermediate of a ball a pin or the like. Further solutions are also possible such as a cam and follower.

The motor of the tool can also be pneumatically driven, even if such tools are not likely to provide the high rotational speed where the invention is most useful.

There is a desire to arrange the release coupling as close to the screw joint as possible, since this leaves correspondingly little remaining moment of inertia after release. It is, however, because of dimensional issues, sometimes motivated to have at least one transmission step between the release coupling and the output shaft.

The invention is most useful in small, low torque machines but can be applied also to larger devices.

## Claims

1. A power tool (1) for tightening screw joints, comprising a rotation motor (3), a device for initiating a braking torque (10) to the motor when, in operation, a predetermined tightening condition has been reached, an output shaft (7) for the connection to a screw or nut engagement member and an intermediate torque transmission unit (4) between the motor and the output shaft, wherein
the intermediate torque transmission unit (4) includes a release coupling (6) for interrupting torque transmission to the output shaft, **characterized in**
- **that** the release coupling (6) includes a first coupling part (11) which is supported by a support (14) shaft being rotationally connected to the motor and a second coupling part (12) which is rotationally connected to the output shaft,
- **that** the first coupling part (11) is displaceable between a first position, where it is in engagement with the second coupling part (12) for torque transmission to the output shaft, and a second position or positions where it is out of engagement with the second coupling part and torque transmission to the output shaft is interrupted, and
- **that** the first coupling part (11) is guided such in relation to the support shaft that a relative rotational inertia movement of the first coupling part (11) in respect of the support shaft (14) caused by applying a braking torque to the motor causes the first coupling part to be displaced from the first position to said second position or positions.

2. The tool according to claim 1, **characterized in that** the rotation motor (3) is an electrically driven motor.

3. The tool according to claim 2, **characterized in that** the device for initiating a braking torque to the motor is a circuit (10) for initiating an electrical braking torque to the motor (3).

4. The tool according to claim 1, 2 or 3, **characterized in that** the first coupling part (11) is subjected to a force in the direction of the first position by at least one from the group: an elastic element (13), an electric coil (19).

5. The tool according to claim 1, 2, or 3, **characterized in that** the first coupling part (11) is subjected to a force in the direction of the second position by the electric coil (19).

6. The tool according to any one of the claims 1 - 5, **characterized in that** the first coupling part is guided by any one from the group: screw tread, ball and groove, pin and groove, cam and follower.

## Patentansprüche

1. Elektrowerkzeug (1) zum Anziehen von Schraubverbindungen, das einen Drehmotor (3) umfasst, eine Einrichtung zum Auslösen eines Bremsmoments (10) auf den Motor, wenn im Betrieb ein festgelegter Anziehzustand erreicht worden ist, eine Abtriebswelle (7) für die Verbindung mit einem Schrauben- oder Muttereingriffselement, und eine Zwischenmomentübertragungseinheit (4) zwischen dem Motor und der Abtriebswelle, wobei
die Zwischenmomentübertragungseinheit (4) eine lösbare Kupplung (6) zum Unterbrechen der Momentübertragung auf die Abtriebswelle aufweist, **dadurch gekennzeichnet,**
- **dass** die lösbare Kupplung (6) einen ersten Kupplungsteil (11) aufweist, der von einer Tragwelle (14) getragen wird, die drehbar mit dem Motor verbunden ist, und einen zweiten Kupplungsteil (12), der drehbar mit der Abtriebswelle verbunden ist,
- **dass** der erste Kupplungsteil (11) zwischen einer ersten Position, in der er zur Momentübertragung auf die Abtriebswelle mit dem zweiten Kupplungsteil (12) im Eingriff steht, und einer zweiten Position oder zweiten Positionen, in der bzw. denen er nicht mit dem zweiten Kupplungsteil in Eingriff steht und die Momentübertragung auf die Abtriebswelle unterbrochen ist, verschiebbar ist, und
- **dass** der erste Kupplungsteil (11) derart bezogen auf die Tragwelle geführt ist, dass eine relative Trägheitsdrehbewegung des ersten Kupplungsteils (11) in Bezug auf die Tragwelle (14), die durch Aufbringen eines Bremsmoments auf den Motor bewirkt wird, dazu führt, dass der erste Kupplungsteil aus der ersten Position in die zweite Position oder die zweiten Positionen verschoben wird.

2. Werkzeug nach Anspruch 1, **dadurch gekennzeichnet, dass** der Drehmotor (3) ein Elektromotor ist.

3. Werkzeug nach Anspruch 2, **dadurch gekennzeichnet, dass** die Einrichtung zum Auslösen eines Bremsmoments auf den Motor eine Schaltung (10) zum Auslösen eines elektrischen Bremsmoments auf den Motor (3) ist.

4. Werkzeug nach Anspruch 1, 2 oder 3, **dadurch gekennzeichnet, dass** der erste Kupplungsteil (11) einer Kraft in Richtung der ersten Position durch mindestens eins aus folgender Gruppe ausgesetzt ist: ein elastisches Element (13), eine elektrische Spule (19).

5. Werkzeug nach Anspruch 1, 2 oder 3, **dadurch gekennzeichnet, dass** der erste Kupplungsteil (11) einer Kraft in Richtung der zweiten Position durch die elektrische Spule (19) ausgesetzt ist.

6. Werkzeug nach einem der Ansprüche 1 bis 5, **dadurch gekennzeichnet, dass** der erste Kupplungsteil durch eins aus folgender Gruppe geführt ist: Schraubengewinde, Kugel und Rille, Stift und Nut, Kurve und Eingriffsglied.

## Revendications

1. Outil motorisé (1) pour serrer des assemblages à vis, comprenant un moteur de rotation (3), un dispositif pour amorcer un couple de freinage (10) vers le moteur quand, en fonctionnement, une condition de serrage prédéterminée a été atteinte, un arbre de sortie (7) pour la connexion à un élément d'engagement avec vis ou écrou et une unité de transmission de couple intermédiaire (4) entre le moteur et l'arbre de sortie, dans lequel
l'unité de transmission de couple intermédiaire (4) comporte un accouplement de dégagement (6) pour interrompre la transmission du couple vers l'arbre de sortie, **caractérisé**
- **en ce que** l'accouplement de dégagement (6) comporte une première pièce d'accouplement (11) qui est soutenue par un arbre de support (14) qui est connecté de manière rotative au moteur et une seconde pièce d'accouplement (12) qui est connectée de manière rotative à l'arbre de sortie,
- **en ce que** la première pièce d'accouplement (11) peut être déplacée entre une première position, dans laquelle elle est en prise avec la seconde pièce d'accouplement (12) pour la transmission du couple vers l'arbre de sortie, et une ou des seconde(s) position(s) dans laquelle/lesquelles elle n'est pas en prise avec la seconde pièce d'accouplement et la transmission du couple vers l'arbre de sortie est interrompue, et
- **en ce que** la première pièce d'accouplement (11) est guidée par rapport à l'arbre de support de telle sorte qu'un mouvement d'inertie rotationnel relatif de la première pièce d'accouplement (11) par rapport à l'arbre de support (14) causé par l'application d'un couple de freinage au moteur amène la première pièce d'accouplement à être déplacée de la première position à ladite ou auxdites seconde(s) position(s).

2. Outil selon la revendication 1, **caractérisé en ce que** le moteur de rotation (3) est un moteur à entraînement électrique.

3. Outil selon la revendication 2, **caractérisé en ce que** le dispositif pour amorcer un couple de freinage vers le moteur est un circuit (10) pour amorcer un couple de freinage électrique vers le moteur (3).

4. Outil selon la revendication 1, 2 ou 3, **caractérisé en ce que** la première pièce d'accouplement (11) est assujettie à une force dans la direction de la première position par au moins un élément du groupe : un élément élastique (13), une bobine électrique (19).

5. Outil selon la revendication 1, 2 ou 3, **caractérisé en ce que** la première pièce d'accouplement (11) est assujettie à une force dans la direction de la seconde position par la bobine électrique (19).

6. Outil selon l'une quelconque des revendications 1 à 5, **caractérisé en ce que** la première pièce d'accouplement est guidée par un élément quelconque du groupe : filetage de vis, bille et rainure, axe et rainure, came et suiveur.
